# FASCICULE DE BREVET EUROPEEN

(11) **EP 4 058 797 B1**
(45) Date de publication et mention de la délivrance du brevet: **22.04.2026**
(21) Numéro de dépôt: 20845404.1
(22) Date de dépôt: 14.12.2020
(51) Int. Cl.: G01N 30/34, G01N 30/74, G01N 30/20

(54) **DISPOSITIFS ET PROCÉDÉS DE MÉLANGE DE LIQUIDES PAR VA-ET-VIENT ENTRE POMPE ET CELLULE DE MESURE, ET ANALYSE PHYSICOCHIMIQUE DES LIQUIDES AINSI MÉLANGÉS**
GERÄTE UND VERFAHREN ZUM MISCHEN VON FLÜSSIGKEITEN DURCH HIN- UND HERBEWEGUNGEN ZWISCHEN PUMPE UND MESSZELLE UND PHYSIKOCHEMISCHE ANALYSE VON FLÜSSIGKEITEN, DIE SO GEMISCHT WERDEN
DEVICES AND METHODS FOR MIXING LIQUIDS BY BACK-AND-FORTH FLOW BETWEEN PUMP AND MEASURING CELL, AND PHYSICOCHEMICAL ANALYSIS OF LIQUIDS THUS MIXED

(30) Priorité: 23.12.2019 FR 1915424
(43) Date de publication de la demande: 21.09.2022
(73) Titulaire: Commissariat à l'Energie Atomique et aux Energies Alternatives, 75015 Paris (FR)
(72) Inventeur: BROUSSARD, Sylvain, 30290 LAUDUN (FR)
(74) Mandataire: Santarelli
(86) Numéro de dépôt international: PCT/FR2020/052407
(87) Numéro de publication internationale: WO 2021/130424

(56) Documents cités:
- EP-A1- 0 183 950
- EP-A1- 2 345 896
- EP-A1- 3 023 782
- WO-A1-2012/058516
- WO-A2-2009/111229

## Description

### Domaine technique

L'invention se rapporte au domaine des dispositifs et procédés de prélèvement et de mélange de liquides.

L'invention présente un intérêt particulier dans le domaine de la chimie analytique, notamment pour la préparation de solutions à analyser.

L'invention n'est pas limitée à ce domaine d'application particulier. Elle peut être mise en œuvre dans tous les domaines industriels et de recherche scientifique.

### État de la technique antérieure

L'analyse physico-chimique d'un liquide nécessite généralement de mélanger préalablement ce liquide avec des réactifs.

Une technique d'analyse conventionnelle, dite à injection séquentielle, consiste à injecter un échantillon du liquide et les réactifs au sein d'un circuit rempli d'un liquide vecteur. L'injection est réalisée à l'aide d'une pompe à seringue, en faisant traverser ces produits dans un tube de mélange hélicoïdal. La solution ainsi mélangée est ensuite éjectée, à l'aide de la pompe, vers une cellule spectrophotométrique passante au sein de laquelle une analyse spectrale est réalisée en continu.

Par rapport à une analyse conventionnelle sur paillasse, cette technique permet de réduire le volume des échantillons analysés (environ 10 µL par échantillon contre environ 5 mL sur paillasse), de réduire le volume des effluents générés (environ 1,5 mL par échantillon analysé contre environ 60 mL sur paillasse), et de réduire la durée d'analyse (environ 2 min 30 sec par échantillon contre plus de 20 min sur paillasse).

Cette technique présente toutefois des inconvénients.

D'une part, le mélange au sein du tube hélicoïdal produit une solution non homogène.

D'autre part, la configuration de la cellule spectrophotométrique permet de réaliser uniquement des mesures temporelles.

En outre, la partie non utilisée de l'échantillon ne peut pas être récupérée pour une analyse ultérieure car l'échantillon prélevé est intégralement mélangé avec le liquide vecteur.

Le document EP 3 023 782 A1 décrit un dispositif de chromatographie en phase liquide, comprenant deux pompes de prélèvement à piston, une pompe de dosage et une pompe de vidange, et dans lequel les liquides prélevés par les pompes de prélèvement sont mélangés au sein d'un mélangeur.

### Exposé de l'invention

Un but de l'invention est de procurer des dispositifs et des procédés capables d'améliorer l'homogénéité du mélange, de fournir un mélange apte à être analysé lors d'une étape d'analyse indépendante, non temporelle, et de réduire encore davantage le volume des effluents générés.

Un autre but de l'invention est d'accroître l'automatisation du processus d'analyse. L'automatisation permet en effet de diminuer les sources d'erreur sur les mesures et d'augmenter la cadence des analyses.

L'invention a pour autre but de permettre le prélèvement à distance importante d'un volume réduit d'un échantillon liquide.

A cet effet, l'invention a pour objet un dispositif de mélange de liquides selon la revendication 1.

Selon l'invention, au moins dans une configuration d'utilisation de ce dispositif, la cavité définit un point bas et ledit deuxième conduit de raccordement est relié au récipient de manière à pouvoir introduire dans la cavité ou en extraire lesdits liquides par ce point bas.

Les notions de « point bas » et « point haut » sont entendues dans leur acception courante en mécanique des fluides. Ainsi, le point bas de la cavité est le point le plus bas de la cavité lorsque le dispositif est dans ladite configuration d'utilisation, c'est-à-dire dans une configuration autorisant un déplacement des liquides de la chambre à la cavité sous l'action d'un déplacement du piston dans le deuxième sens et de la cavité à la chambre sous l'action d'un déplacement du piston dans ledit premier sens, lorsque la vanne est en position de transfert.

Le positionnement du deuxième conduit de raccordement au niveau du point bas de la cavité permet d'extraire par ce conduit une majorité sinon la totalité des liquides contenus dans la cavité.

Il est ainsi possible de réaliser une étape de mélange en faisant recirculer les liquides dans le dispositif après leur introduction initiale dans la cavité. Plus précisément, cette étape de mélange comprend au moins un déplacement des liquides de la cavité à la chambre puis de la chambre à la cavité, c'est-à-dire au moins un va-et-vient des liquides entre la cavité et la chambre.

Lors d'une telle étape de mélange, les liquides sont soumis à des contraintes résultant des changements de section entre la cavité, les conduits et la chambre. Les conduits présentent en effet une section inférieure à la section de la cavité et à celle de la chambre, par exemple une section environ dix fois inférieure.

Dans le cadre d'essais dans lesquels ce dispositif a été utilisé pour mélanger des solutions aqueuses en vue d'une analyse spectrophotométrique, il a été constaté avec surprise qu'un ou deux allers-retours des liquides entre la cavité et la chambre permettent d'obtenir une solution homogène apte à procurer des résultats de mesure présentant à la fois un écart type et un biais très faibles.

L'invention permet d'améliorer et d'automatiser à la fois le mélange des liquides et le rinçage du dispositif tout en simplifiant le dispositif.

Le positionnement du deuxième conduit de raccordement au niveau du point bas de la cavité permet en effet d'automatiser le rinçage du dispositif et notamment de la cavité du récipient, par introduction dans le dispositif, via l'un des conduits d'entrée, d'un liquide de rinçage.

Il a également été constaté lors des essais précités l'efficacité d'un tel rinçage en termes d'élimination de traces susceptibles d'affecter une nouvelle mesure.

L'invention permet ainsi d'automatiser la plupart des étapes incluant le rinçage du dispositif et permet d'obtenir un mélange de liquides homogène de manière rapide, fiable et simple, notamment sans recourir à un organe mécanique de mélange tel qu'un agitateur magnétique, une plaque vibrante ou un mécanisme de brassage par pompe.

De préférence, la cavité peut être ouverte à une extrémité du récipient opposée au point bas.

La cavité peut ainsi être exposée à une pression environnante telle la pression atmosphérique.

Cela permet notamment d'éviter des phénomènes de dépression ou de surpression dans la cavité et le circuit fluidique lors de la mise en œuvre du dispositif.

Dans un mode de réalisation, la cavité peut présenter une section se rétrécissant en allant vers le point bas.

Un tel rétrécissement de la cavité permet d'éviter la rétention de liquide dans la cavité, d'améliorer le mélange des liquides lors de leur extraction de la cavité par le deuxième conduit de raccordement et d'améliorer l'efficacité du rinçage de la cavité.

Lorsque le récipient est une cuve de mesure spectrophotométrique, un tel rétrécissement de la cavité permet aussi de réduire le volume de cette cuve tout en définissant une hauteur suffisante pour réaliser une mesure spectrophotométrique convenable.

De préférence, au moins lorsque le dispositif est dans ladite configuration d'utilisation, la chambre peut définir un point bas et ledit premier conduit de raccordement peut être relié à la pompe de manière à pouvoir introduire dans la chambre ou en extraire lesdits liquides par ce point bas.

Ainsi, lorsque sont introduits dans la chambre à la fois de l'air et des liquides, l'air peut remonter dans la chambre contre le piston tandis que les liquides peuvent occuper un espace situé verticalement entre le volume d'air et le point bas de la chambre.

Lorsque le piston est déplacé dans le deuxième sens, l'air présent dans la chambre pousse les liquides hors de la chambre, ce qui permet notamment de déplacer la totalité de ces liquides jusque dans la cavité du récipient et éventuellement d'injecter des bulles d'air dans les liquides présents dans la cavité. A cet effet, le dispositif peut être dimensionné de sorte que, lorsque la totalité des liquides provenant de la chambre a été introduite dans la cavité du récipient, une quantité d'air résiduelle soit encore présente dans la chambre, entraînant la formation de bulles d'air dans les liquides au sein de la cavité en fin de course du piston.

Le récipient peut être un récipient servant uniquement au mélange des liquides ou servant à la fois à leur mélange et à leur analyse. Autrement dit, le récipient peut former une cellule de mesure.

Dans un mode de réalisation préféré, le récipient peut être une cuve de mesure spectrophotométrique.

Le dispositif de mélange est bien entendu compatible avec d'autres techniques de détection telles que la colorimétrie, la spectrométrie d'absorption atomique, la spectrométrie de masse à couplage inductif, la réfractométrie, la chimioluminescence ou encore l'électrochimie.

De préférence, le dispositif de mélange défini ci-dessus est un dispositif microfluidique.

Dans un mode de réalisation, la vanne à laquelle il est fait référence ci-dessus peut être une vanne principale et le dispositif de mélange peut comprendre un dispositif de prélèvement comprenant une vanne de prélèvement et un conduit de prélèvement relié à une voie de prélèvement de la vanne de prélèvement. De préférence, la vanne de prélèvement peut occuper sélectivement :
- une position de prélèvement de liquide établissant une communication fluidique entre le conduit de prélèvement et un premier desdits conduits d'entrée de manière à pouvoir déplacer le liquide du conduit de prélèvement vers la chambre sous l'action d'un déplacement du piston dans le premier sens lorsque la vanne principale est dans une première position de prélèvement établissant une communication fluidique entre ledit premier conduit d'entrée et la chambre,
- une position de prélèvement d'air établissant une communication fluidique entre une voie ouverte de la vanne de prélèvement et ledit premier conduit d'entrée, ladite voie ouverte étant exposée à l'air environnant, de manière à pouvoir déplacer de l'air environnant vers la chambre sous l'action d'un déplacement du piston dans le premier sens lorsque la vanne principale est dans ladite première position de prélèvement.

Un tel dispositif de prélèvement permet de prélever un volume de liquide relativement faible à une distance relativement importante, en acheminant ce volume de liquide entre deux volumes d'air prélevé par ladite voie ouverte.

En dehors du cadre de la présente invention, le dispositif de prélèvement peut être associé à un dispositif différent du dispositif de mélange décrit ci-dessus.

L'invention a aussi pour objet un dispositif d'analyse physico-chimique d'un liquide, ce dispositif d'analyse comprenant un dispositif de mélange tel que défini ci-dessus.

Ce dispositif d'analyse peut comprendre un système mettant en œuvre l'une ou l'autre des techniques de détection précitées.

Ainsi, le dispositif d'analyse peut par exemple comprendre un détecteur spectrophotométrique.

Selon un autre aspect, l'invention a pour objet un procédé de mélange de liquides à l'aide d'un dispositif de mélange tel que défini ci-dessus, ce procédé comprenant :
- une étape de prélèvement dans laquelle lesdits liquides sont respectivement déplacés depuis lesdits conduits d'entrée vers la chambre de la pompe, cette étape comprenant un positionnement de la vanne dans lesdites positions de prélèvement respectives,
- une étape de remplissage du récipient comprenant un déplacement d'au moins une partie des liquides de la chambre à la cavité, cette étape comprenant un positionnement de la vanne dans ladite position de transfert,
- une étape de mélange comprenant un déplacement d'au moins une partie des liquides de la cavité à la chambre puis de la chambre à la cavité.

Ce procédé de mélange confère les mêmes avantages que ceux indiqués ci-dessus en référence au dispositif de mélange.

L'invention a aussi pour objet un procédé d'analyse physico-chimique d'un liquide à l'aide d'un dispositif d'analyse tel que défini ci-dessus, ce procédé d'analyse incluant un procédé de mélange tel que défini ci-dessus.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
- La figure 1 est une vue schématique d'un dispositif de mélange conforme à l'invention, comprenant une pompe à piston, le piston étant dans une première position ;
- La figure 2 est une vue schématique du dispositif de la figure 1, le piston de la pompe étant dans une deuxième position ;
- La figure 3 est une vue schématique en coupe d'une cuve de mesure spectrophotométrique conforme à l'invention ;
- La figure 4 est une vue schématique d'un dispositif de prélèvement conforme à l'invention.

### Description détaillée de modes de réalisation

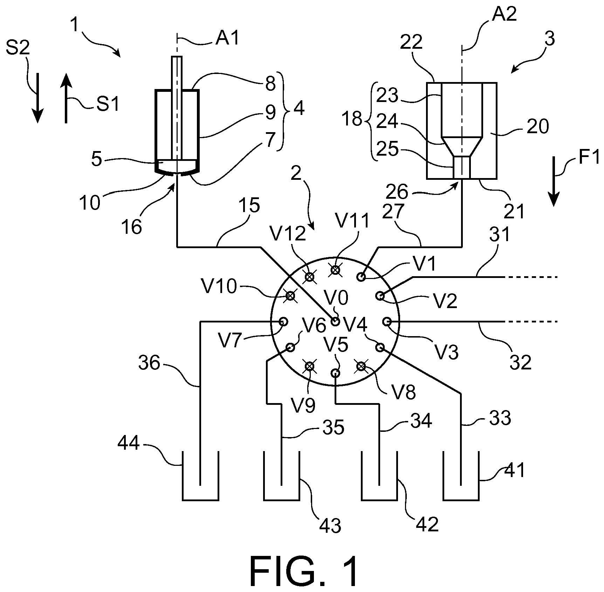

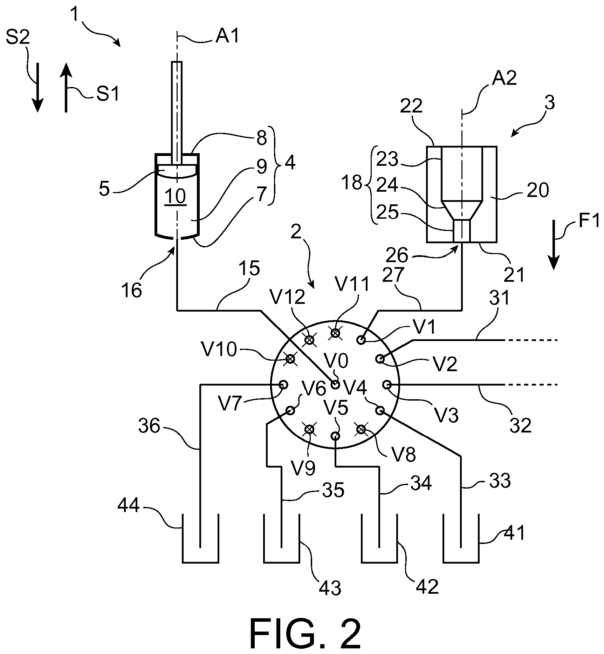

Il est représenté aux figures 1 et 2, de manière schématique et simplifiée, un dispositif conforme à l'invention.

Ce dispositif comprend une pompe 1, une vanne 2 et un récipient 3 reliés entre eux de manière à pouvoir y déplacer et mélanger des liquides.

La pompe 1 comprend un corps 4 et un piston 5.

Dans cet exemple, le corps 4 forme un logement cylindrique s'étendant le long d'un axe longitudinal A1 le long duquel peut coulisser le piston 5.

Sur les figures 1 et 2, le dispositif est dans une configuration dite d'utilisation.

Dans cette configuration d'utilisation, l'axe longitudinal A1 est sensiblement parallèle à la verticale, c'est-à-dire à la direction le long de laquelle s'exerce la force de pesanteur F1.

Le corps 4 de la pompe 1 comprend une extrémité verticalement inférieure 7, une extrémité verticalement supérieure 8 et une paroi latérale 9 reliant l'extrémité inférieure 7 et l'extrémité supérieure 8 l'une à l'autre.

Les expressions « inférieur » et « supérieur », ou « verticalement inférieur » et « verticalement supérieur » sont définies par rapport à l'orientation de la force de pesanteur F1. Ainsi, lorsqu'un élément comprend une partie inférieure et une partie supérieure, un liquide soumis à la force de pesanteur F1 tend à se déplacer sous l'action de cette force dans un sens allant de la partie supérieure vers la partie inférieure.

En référence à la figure 2, le piston 5 et l'extrémité inférieure 7 du corps 4 délimitent verticalement entre eux une chambre 10. Radialement, la chambre 10 est délimitée par la paroi latérale 9 du corps 4 de la pompe 1.

Sur la figure 1, le piston 5 est dans une première position dans laquelle la chambre 10 a un volume nul. Le piston 5 est représenté à la figure 2 dans une deuxième position dans laquelle la chambre 10 a un volume positif.

Le volume lorsque le piston 5 est dans la deuxième position définit une capacité totale de remplissage de la chambre 10 et correspond, dans cet exemple, à un volume d'environ 1000 µL.

La pompe 1 est une pompe à piston aussi connue sous la dénomination « pompe à seringue ».

En référence à la figure 1, la vanne 2 est dans cet exemple une vanne rotative multivoie.

Cette vanne 2 comprend un point de distribution commun V0 relié à la chambre 10 de la pompe 1 par un premier conduit 15 de raccordement.

Les figures 1 et 2 montrent la pompe 1, la vanne 2 et le conduit 15 sous forme d'éléments distincts. Le conduit 15 peut toutefois être moulé dans le corps de la vanne 2 et être relié à la chambre 10 de la pompe 1 par l'intermédiaire d'un raccordement fileté (non représenté). Le point de distribution commun V0 est dans ce cas constitué par une extrémité du conduit 15. Plus généralement, la pompe 1, la vanne 2 et le conduit 15 peuvent former un produit unique, tel le produit connu sous le nom de « pompe XCalibur Cavro » (marque déposée).

Dans tous les cas, le premier conduit de raccordement 15 est configuré pour établir une communication fluidique entre le point de distribution commun V0 et la chambre 10.

De manière générale, la vanne 2 devrait comprendre au moins une voie d'entrée pour introduire des liquides dans le dispositif et une voie reliée au récipient 3. Dans ce mode de réalisation minimaliste, l'évacuation des liquides peut être réalisée par cette même voie d'entrée. Il est toutefois préféré d'introduire dans le dispositif les différents liquides par des voies d'entrée respectives et de les évacuer par une voie de sortie dédiée. Pour cette raison, il est préféré que la vanne 2 comprenne au moins quatre voies, soit au moins deux voies d'entrée, une voie de sortie, et une voie reliée au récipient 3.

Dans l'exemple de la figure 1, la vanne 2 comprend douze voies V1-V12.

Les voies V8 à V12 n'étant pas utilisées dans cet exemple, celles-ci sont équipées de bouchons représentés par des croix.

Quels que soient le nombre de voies et le mécanisme de changement de position de la vanne 2, celle-ci est configurée pour pouvoir être placée de manière sélective dans différentes positions dans chacune desquelles le point de distribution commun V0 et l'une desdites voies V1-V12 sont mis en communication fluidique l'un avec l'autre.

Le premier conduit de raccordement 15 est relié à la pompe 1 de manière à pouvoir introduire dans la chambre 10 ou en extraire des liquides par un point bas 16 de la chambre 10.

Le point bas 16 de la chambre 10 est dans cet exemple situé verticalement au niveau de l'extrémité inférieure 7 du corps 4 de la pompe 1.

L'extrémité inférieure 7 comprend à cet effet une ouverture formant ce point bas 16 et permettant d'établir une communication fluidique entre la chambre 10 et le premier conduit 15, et par suite entre la chambre 10 et le point de distribution commun V0.

Ainsi, le premier conduit de raccordement 15 est relié à la pompe 1 de manière à pouvoir introduire dans la chambre 10 ou en extraire des liquides par le point bas 16.

Comme cela se déduit de la description qui suit, lorsque la chambre 10 est remplie à la fois d'un volume d'air et d'un volume de liquides par hypothèse non miscibles, le raccordement du premier conduit 15 au niveau du point bas 16 de la pompe 1 a pour conséquence que l'air occupe une partie supérieure de la chambre 10 et les liquides une partie inférieure de la chambre 10, de sorte que le volume de liquides soit évacué par le premier conduit 15 avant le volume d'air.

Concernant le récipient 3, celui-ci comprend une cavité 18 configurée pour recevoir des liquides.

Dans l'exemple des figures 1 et 2, la cavité 18 est formée par une ouverture traversant de part en part le récipient 3 le long d'un axe longitudinal A2.

Dans la configuration d'utilisation du dispositif, cet axe longitudinal A2 est dans cet exemple sensiblement parallèle à la verticale et à l'axe longitudinal A1.

Le récipient 3 comprend un corps 20 formant une extrémité verticalement inférieure 21 et une extrémité verticalement supérieure 22.

Dans cet exemple, l'ouverture formant la cavité 18 présente une section variable le long de l'axe A2.

En se déplaçant le long de l'axe A2 depuis l'extrémité supérieure 22 jusqu'à l'extrémité inférieure 21 du corps 20, la cavité 18 comprend un premier tronçon 23 sensiblement cylindrique, un deuxième tronçon 24 sensiblement conique et un troisième tronçon 25 sensiblement cylindrique. Le diamètre du premier tronçon 23 est supérieur au diamètre du troisième tronçon 25.

Le premier tronçon 23 de la cavité 18 débouche sur une surface externe de l'extrémité supérieure 22 du récipient 3 de sorte que la cavité 18 soit exposée à la pression atmosphérique, ou en tous cas à la pression de l'environnement dans lequel le récipient 3 est placé.

Le troisième tronçon 25 de la cavité 18 débouche sur une surface externe de l'extrémité inférieure 21 du récipient 3, en définissant un point bas 26 de la cavité 18, au moins dans ladite configuration d'utilisation.

Sur les figures 1 et 2, les proportions de la cavité 18 et de chacun des autres éléments du dispositif ne sont pas réalistes, ces figures ayant uniquement vocation à illustrer le principe de l'invention.

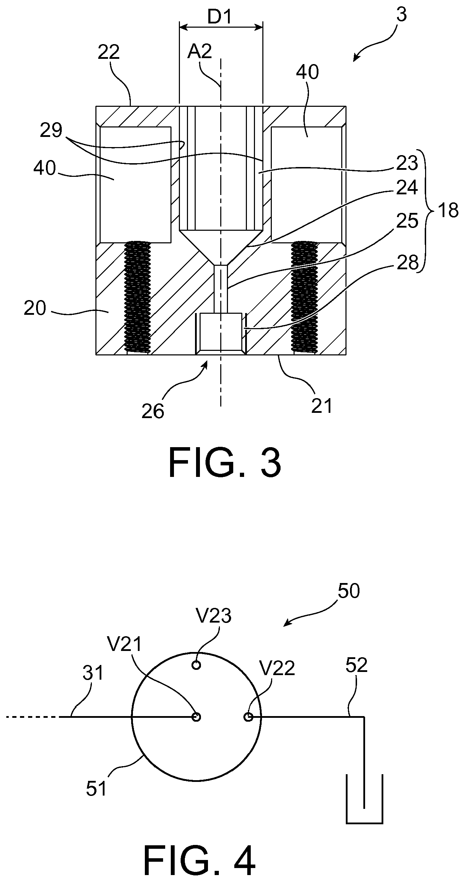

A titre d'exemple non limitatif, il est représenté à la figure 3 un récipient 3 effectivement conçu dans le cadre de cette invention.

Le récipient 3 de la figure 3 est une cuve de mesure spectrophotométrique.

La cuve 3 de la figure 3 est uniquement décrite selon ses différences par rapport au récipient 3 de la figure 1.

La cavité 18 de la cuve 3 comprend un quatrième tronçon 28 sensiblement cylindrique débouchant sur la surface externe de l'extrémité inférieure 21 du récipient 3, en définissant ledit point bas 26 de la cavité 18.

Le quatrième tronçon 28 est configuré pour coopérer avec un conduit, par l'intermédiaire d'un raccord fileté (non représenté), afin d'acheminer des liquides dans la cavité 18 via ce conduit.

De préférence, le troisième tronçon 25 présente une section ayant un diamètre sensiblement identique au diamètre interne d'un tel conduit.

Le premier tronçon 23 est réalisé sous forme d'une ouverture partiellement cylindrique usinée de manière à former deux surfaces 29 parallèles l'une par rapport à l'autre et parallèles à l'axe longitudinal A2.

Les surfaces 29 sont polies et éloignées l'une de l'autre d'une distance D1 définissant un trajet optique. Dans cet exemple, le trajet optique D1 est de 10 mm.

Les surfaces 29 sont respectivement agencées en vis-à-vis de logements 40 destinées à recevoir des lentilles de collimation (non représentées) permettant d'optimiser le parcours optique.

Une telle cuve 3 permet de réaliser des mesures spectrophotométriques sur un mélange de liquides reçu dans la cavité 18 au moins en partie au niveau du premier tronçon 23.

Dans un mode de réalisation, le récipient 3 du dispositif des figures 1 et 2 est une cuve de mesure spectrophotométrique telle celle représentée à la figure 3.

En référence à la figure 1, le dispositif comprend un deuxième conduit 27 de raccordement de la cavité 18 du récipient 3 à la voie V1 de la vanne 2, aussi appelée voie de transfert.

Lorsque le récipient 3 est la cuve de la figure 3, ledit conduit mentionné ci-dessus dans la description relative à la figure 3 consiste dans ce deuxième conduit de raccordement 27.

Plus généralement, le deuxième conduit de raccordement 27 est configuré pour établir une communication fluidique entre la voie de transfert V1 de la vanne 2 et la cavité 18 du récipient 3.

Le deuxième conduit de raccordement 27 est relié au récipient 3 de manière à pouvoir introduire dans la cavité 18 ou en extraire des liquides par ledit point bas 26 de cette cavité 18.

Dans la configuration de la figure 1 ou 2, lorsque la cavité 18 contient des liquides, ceux-ci tendent à se déplacer vers le deuxième conduit de raccordement 27 sous l'action de la force de pesanteur F1.

Cette configuration permet notamment d'extraire une majorité voire la totalité des liquides contenus dans la cavité 18 par ce deuxième conduit de raccordement 27.

Dans l'exemple de la figure 1, le dispositif comprend cinq conduits d'entrée 31-35 et un conduit de sortie 36.

Les conduits d'entrée 31-35 sont respectivement reliés aux voies V2-V6, dites voies d'entrée, par l'une de leurs extrémités.

Dans cet exemple, l'autre extrémité de chacun des conduits d'entrée 31 et 32 est destinée à être reliée à un point de prélèvement (non représenté) de manière à établir une communication fluidique entre ce point de prélèvement et la voie d'entrée V2 ou V3 respectivement.

Le dispositif comprend dans cet exemple quatre flacons 41-44, parmi lesquels trois flacons 41-43 contenant chacun un liquide respectif et un flacon 44 destiné à recevoir des effluents liquides.

Les conduits d'entrée 33 à 35 sont plongés par leur autre extrémité dans les flacons 41 à 43, respectivement, de manière à pouvoir prélever les liquides contenus dans ces flacons.

Le conduit de sortie 36 est relié à la voie V7, dite voie de sortie, par l'une de ses extrémités. Son autre extrémité est placée dans le flacon 44 de manière à pouvoir y déverser des effluents liquides.

Comme indiqué ci-dessus, la vanne 2 peut être placée dans différentes positions dans chacune desquelles l'une parmi les voies V1 à V12 est mise en communication fluidique avec le point de distribution commun V0.

En particulier, la vanne 2 peut occuper sélectivement des positions de prélèvement établissant chacune une communication fluidique entre l'un respectif des conduits d'entrée 31-35 et la chambre 10 de la pompe 1.

En prenant l'exemple du conduit d'entrée 33, la vanne 2 peut occuper une position de prélèvement établissant une communication fluidique entre la voie V4 et le point de distribution V0 et donc entre le conduit d'entrée 33 et la chambre 10 de la pompe 1. Une telle position de prélèvement permet de prélever une partie du liquide contenu dans le flacon 41 et de déplacer cette partie de liquide vers la chambre 10 sous l'action d'un déplacement du piston 5 dans un premier sens S1.

Le premier sens S1 correspond à un déplacement du piston 5 vers la deuxième position illustrée à la figure 2, à partir de la première position illustrée à la figure 1 ou d'une position intermédiaire (non représentée).

Les liquides contenus dans les flacons 42 et 43 peuvent être prélevés et introduits dans la chambre 10 de la pompe 1 selon le même principe, respectivement via les conduits d'entrée 34 et 35, en plaçant la vanne 2 dans une position de prélèvement correspondante.

Un prélèvement de liquide peut aussi être réalisé de manière analogue à l'aide du conduit d'entrée 31 ou 32, par exemple en plongeant l'extrémité libre de l'un de ces conduits d'entrée, c'est-à-dire l'extrémité opposée à celle reliée à la vanne 2, dans une cuve (non représentée) contenant un tel liquide, et en plaçant la vanne 2 dans une position de prélèvement établissant une communication fluidique entre le point de distribution V0 et la voie V2 ou V3.

Une autre position de la vanne 2, dite position de transfert, permet d'établir une communication fluidique entre le point de distribution V0 et la voie de transfert V1, et donc entre la chambre 10 de la pompe 1 et la cavité 18 du récipient 3.

Une telle position de transfert permet de déplacer des liquides préalablement introduits dans la chambre 10 depuis cette chambre 10 jusque dans la cavité 18 du récipient 3, via les conduits de raccordement 15 et 27.

Pour ce faire, le piston 5 de la pompe 1 est déplacé dans un deuxième sens S2.

Le deuxième sens S2 correspond à un déplacement du piston 5 vers la première position illustrée à la figure 1, à partir de la deuxième position illustrée à la figure 2 ou d'une position intermédiaire (non représentée).

Pour éviter un débordement des liquides ainsi introduits dans la cavité 18, celle-ci forme un volume supérieur à la capacité totale de remplissage de la chambre 10.

La position de transfert permet aussi de déplacer des liquides contenus dans la cavité 18, typiquement après les y avoir introduits selon le principe décrit ci-dessus, depuis cette cavité 18 jusque dans la chambre 10 de la pompe 1, via les conduits de raccordement 27 et 15, en déplaçant le piston 5 dans le premier sens S1.

Lorsque la vanne 2 est en position de transfert, il est ainsi possible de déplacer des liquides selon un mouvement de va-et-vient entre la chambre 10 de la pompe 1 et la cavité 18 du récipient 3, en particulier afin de mélanger ces liquides et améliorer l'homogénéité de ce mélange.

Afin de contrôler précisément le déplacement du piston 5 et le volume de liquide déplacé par le piston 5, la pompe 1 peut comprendre un codeur monté sur son moteur (non représenté).

Ladite configuration d'utilisation du dispositif est appelée ainsi car elle permet sa mise en œuvre notamment en vue de mélanger des liquides. Cette configuration autorise par conséquent un déplacement de liquides de la chambre 10 à la cavité 18 et de la cavité 18 à la chambre 10 lorsque la vanne 2 est en position de transfert.

Il est évident que dans une autre configuration dans laquelle le récipient 3 serait verticalement disposé dans l'autre sens, c'est-à-dire avec le point 26 constituant un point haut et non un point bas et avec l'extrémité 22 constituant une extrémité inférieure et non une extrémité supérieure, les liquides arrivant dans la cavité 18 par le deuxième conduit 27 seraient entraînés hors de celle-ci sous l'action de la force de pesanteur F1 en raison du débouchement de la cavité 18 sur la surface externe de l'extrémité 22 du récipient 3.

La vanne 2 peut aussi être placée dans une position de vidange établissant, dans cet exemple, une communication fluidique entre le point de distribution V0 et la voie de sortie V7, et donc entre la chambre 10 de la pompe 1 et le conduit de sortie 36.

Une telle position de vidange permet d'évacuer des liquides présents dans la chambre 10 et/ou dans le premier conduit de raccordement 15 vers le flacon 44, en déplaçant le piston 5 dans le deuxième sens S2.

Le dispositif de la figure 1 forme donc un dispositif de mélange.

A titre d'indication nullement limitative, les différents conduits 15, 27 et 31-36 peuvent présenter un diamètre externe d'environ 16 mm et un diamètre interne d'environ 500 µm.

Dans un mode de réalisation dans lequel les conduits d'entrée 31 et/ou 32 sont destinés à prélever un ou des liquides à une distance relativement importante de la vanne 2, par exemple de plusieurs mètres, le diamètre interne de ces conduits d'entrée devrait être augmenté de manière à réduire les pertes de charge. Par exemple, le diamètre interne des conduits d'entrée 31 et/ou 32 peut dans ce cas être égal à 800 µm.

La figure 4 montre un dispositif 50 permettant de prélever un volume de liquide relativement faible à une distance relativement importante.

Ce dispositif de prélèvement 50 peut être relié au dispositif de mélange de la figure 1 de la manière décrite ci-après, ou à tout autre dispositif nécessitant de réaliser un tel prélèvement à distance en limitant le volume de liquide prélevé.

Le dispositif 50 de la figure 4 comprend une vanne 51 rotative multivoie et un conduit 52 de prélèvement.

La vanne 51 comprend dans cet exemple un point de distribution commun V21, une voie de prélèvement V22 et une voie V23 exposée à l'air ambiant, aussi appelée voie ouverte.

La vanne 51 est configurée pour pouvoir être placée de manière sélective soit dans une position de prélèvement de liquide dans laquelle le point de distribution V21 est mis en communication fluidique avec la voie de prélèvement V22, soit dans une position de prélèvement d'air dans laquelle le point de distribution V21 est mis en communication fluidique avec la voie ouverte V23.

Dans cet exemple, il est relié au point de distribution V21 le conduit d'entrée 31 du dispositif de la figure 1, par son extrémité opposée à celle reliée à la voie d'entrée V2 de la vanne 2.

Le conduit de prélèvement 52 est relié par l'une de ses extrémités à la voie de prélèvement V22. L'autre extrémité du conduit 52, qui est libre, est immergée dans un liquide à prélever, en un point de prélèvement situé à une distance relativement proche de la vanne 51 par comparaison avec la distance éloignant les vannes 2 et 51 l'une de l'autre. Autrement dit, la longueur du conduit d'entrée 31 est très supérieure à celle du conduit de prélèvement 52.

Dans un mode de réalisation, le dispositif de la figure 1 comprend un ou plusieurs agitateurs magnétiques (non représentés) configurés pour homogénéiser, avant prélèvement, le ou les liquides respectivement contenus dans l'un ou plusieurs des flacons 41 à 43. Chaque agitateur comprend par exemple un barreau aimanté placé dans le fond du flacon correspondant.

L'invention concerne aussi un dispositif d'analyse physico-chimique comprenant d'une part un détecteur (non représenté), par exemple de type spectrophotométrique, et d'autre part un dispositif de mélange tel que décrit ci-dessus, le dispositif de mélange comprenant ou non un ou plusieurs dispositifs de prélèvement tel le dispositif 50 de la figure 4.

Dans un mode de réalisation, les différents composants formant le dispositif de mélange de la figure 1, et éventuellement un tel détecteur permettant de réaliser des mesures sur des liquides présents dans la cavité 18, sont intégrés dans un boîtier (non représenté).

Dans un mode de réalisation, ce boîtier est réalisé par fabrication additive.

### Exemple générique d'un procédé de mélange et d'analyse

L'exemple qui suit vise à illustrer le principe général de fonctionnement du dispositif de mélange et d'analyse décrit ci-dessus, et la mise en œuvre d'un procédé de mélange et d'analyse conforme à l'invention.

Il est considéré pour cet exemple que le dispositif ne comprend initialement aucun liquide dans la chambre 10 de la pompe 1, dans la vanne 2, dans la cavité 18 du récipient 3, dans les conduits de raccordement 15 et 27, dans les conduits d'entrée 31 à 35, et dans le conduit de sortie 36.

Dans cet exemple, les flacons 41 et 42 comprennent respectivement un premier et un deuxième liquide.

Les étapes qui suivent sont réalisées dans l'ordre.

A l'état initial, le piston 5 de la pompe 1 est dans la première position illustrée à la figure 1.

La vanne 2 est tout d'abord placée dans une première position de prélèvement établissant une communication fluidique entre le conduit d'entrée 33 et la chambre 10 de la pompe 1, via la voie V4, le point de distribution V0 et le premier conduit de raccordement 15.

Le piston 5 est déplacé dans le premier sens S1.

Lors d'une première phase de ce déplacement, l'air présent dans le conduit d'entrée 33 et dans le premier conduit de raccordement 15 pénètre progressivement dans la chambre 10 et, simultanément, une partie du premier liquide présent dans le flacon 41 est prélevée en se déplaçant dans le conduit d'entrée 33 en direction de la chambre 10 jusqu'à atteindre l'extrémité du conduit 15 reliée à la pompe 1.

Lors d'une deuxième phase du déplacement du piston 5 dans le premier sens S1, le premier liquide pénètre progressivement dans la chambre 10.

A l'issue de cette deuxième phase, un premier volume du premier liquide est présent dans la chambre 10 et un deuxième volume du premier liquide remplit le premier conduit de raccordement 15.

Le déplacement du piston 5 est interrompu au moins le temps de placer la vanne 2 dans une deuxième position de prélèvement établissant une communication fluidique entre le conduit d'entrée 34 et la chambre 10, via la voie V5, le point de distribution V0 et le premier conduit de raccordement 15.

Le déplacement du piston 5 peut alors poursuivre sa course dans le premier sens S1 de sorte que, lors d'une troisième phase de ce déplacement :
- ledit deuxième volume du premier liquide présent dans le premier conduit de raccordement 15 pénètre progressivement dans la chambre 10, suivi du volume d'air présent dans le conduit d'entrée 34 avant aspiration du deuxième liquide, et simultanément
- une partie du deuxième liquide présent dans le flacon 42 est prélevé en se déplaçant dans le conduit d'entrée 34 en direction de la chambre 10 jusqu'à atteindre l'extrémité du conduit 15 reliée à la pompe 1.

Lors d'une quatrième phase du déplacement du piston 5 dans le premier sens S1, le deuxième liquide pénètre progressivement dans la chambre 10.

A l'issue de cette quatrième phase, la chambre 10 comprend :
- un volume d'air en partie supérieure, incluant d'une part le volume d'air initialement présent dans le conduit d'entrée 33 et dans le premier conduit de raccordement 15 et, d'autre part, le volume d'air présent dans le conduit d'entrée 34 avant aspiration du deuxième liquide,
- lesdits premier et deuxième volumes du premier liquide,
- un premier volume du deuxième liquide.

Un deuxième volume du deuxième liquide remplit le premier conduit de raccordement 15.

Dans cet exemple, le piston 5 occupe, à l'issue de cette quatrième phase, la deuxième position illustrée à la figure 2.

La vanne 2 est ensuite placée dans la position de transfert établissant une communication fluidique entre la chambre 10 de la pompe 1 et la cavité 18 du récipient 3.

Le piston 5 est déplacé dans le deuxième sens S2 de manière à acheminer au moins une partie, de préférence la totalité, des premier et deuxième liquides présents dans la chambre 10 et dans le premier conduit de raccordement 15 jusque dans la cavité 18 du récipient 3.

Dans cet exemple, le dispositif est configuré de sorte que le volume d'air présent dans la chambre 10 avant initiation de ce déplacement, c'est-à-dire lorsque le piston 5 est dans la deuxième position (figure 2), soit supérieur à la contenance du premier conduit de raccordement 15 et du deuxième conduit de raccordement 27. Ainsi, le déplacement du piston 5 de la deuxième position (figure 2) jusqu'à la première position (figure 1) permet d'introduire dans la cavité 18 la totalité des premier et deuxième liquides présents dans la chambre 10 et dans le premier conduit de raccordement 15.

Lors de ce déplacement, qui correspond à une étape de remplissage du récipient 3, le premier et le deuxième liquide sont au moins partiellement mélangés. Ce mélange peut toutefois s'avérer insuffisant pour obtenir une homogénéité satisfaisante aux fins d'une mesure spectrophotométrique par exemple.

Une étape de mélange est alors réalisée en maintenant la vanne 2 en position de transfert, et en déplaçant le piston 5 selon au moins une séquence aller-retour consistant en un déplacement du piston 5 dans le premier sens S1 puis dans le deuxième sens S2.

Une telle séquence de déplacement du piston 5 se traduit par un déplacement en va-et-vient des liquides entre la cavité 18 et la chambre 10.

Il est ainsi possible d'améliorer l'homogénéité de la solution constituée par le mélange du premier et du deuxième liquide.

Bien entendu, la quantité de déplacement du piston 5 dans le premier sens S1 et dans le deuxième sens S2 lors de cette étape de mélange, ou encore la durée entre deux déplacements respectifs du piston 5, peuvent être adaptées en fonction de la nature des liquides à mélanger et du niveau d'homogénéité souhaité.

A l'issue de l'étape de mélange, laquelle comprend par conséquent une ou plusieurs séquences d'allers-retours du piston 5, la cavité 18 du récipient 3 contient un mélange du premier et du deuxième liquide formant une solution susceptible de faire l'objet d'une mesure.

Dans cet exemple, le récipient 3 est une cuve de mesure spectrophotométrique, et le dispositif est programmé de manière à réaliser, à l'aide d'un détecteur spectrophotométrique et après l'étape de mélange, une ou plusieurs mesures sur cette solution.

Après une telle étape de mesure, la vanne 2 est maintenue ou repositionnée dans la position de transfert, le piston 5 est déplacé dans le premier sens S1 de manière à acheminer dans la chambre 10 au moins une partie des liquides contenus dans le récipient 3.

La vanne 2 est ensuite placée dans la position de vidange, puis le piston 5 déplacé jusqu'à la première position pour évacuer les liquides vers le flacon 44.

Avant réalisation d'une nouvelle mesure sur une nouvelle combinaison des mêmes liquides ou d'autres liquides, une étape de rinçage est de préférence réalisée à l'aide d'un liquide de rinçage prélevé par exemple dans le flacon 43 par le conduit d'entrée 35, et acheminé dans les différentes parties du dispositif (chambre 10, cavité 18) puis évacué vers le flacon 44 selon les mêmes principes que ceux qui viennent d'être décrits.

L'invention permet de réaliser un cycle ou une série de cycles comprenant un prélèvement de liquides, leur mélange, la réalisation de mesures sur la solution constituée par les liquides mélangés, ainsi qu'une analyse basée sur de telles mesures, tout cela de manière automatisée, ce qui permet notamment de limiter les interventions d'opérateurs et d'accroître la sûreté du personnel.

L'invention permet aussi de réduire le volume des échantillons nécessaires aux analyses ainsi que le volume des effluents générés par ces analyses.

Dans un mode de réalisation non représenté, le récipient 3 sert uniquement au mélange, et la mesure est réalisée au sein d'une cellule distincte (non représentée). Pour ce faire, après mélange des liquides par va-et-vient entre la chambre 10 et la cavité 18, la solution ainsi homogénéisée est éjectée vers une telle cellule via une voie dédiée de la vanne 2, par exemple la voie V8.

### Procédé de prélèvement à distance

Dans l'exemple qui précède, les liquides à mélanger sont prélevés dans les flacons 41 et 42, ceux-ci étant situés à une distance relativement faible de la vanne 2, c'est-à-dire une distance permettant d'utiliser des conduits 33 et 34 dont la faible longueur limite en tant que telle la quantité de liquide qu'il est nécessaire de prélever.

Il est décrit ci-après, dans le cadre d'un tel procédé de mélange, le cas d'un prélèvement à un point de prélèvement situé à une distance relativement importante, c'est-à-dire à une distance nécessitant d'utiliser un conduit de longueur relativement importante, par exemple de plusieurs mètres.

Le procédé de prélèvement de l'invention permet d'acheminer un liquide sur une distance relativement importante tout en réduisant la quantité de liquide effectivement prélevée.

A la différence du procédé de mélange décrit ci-dessus, ledit premier liquide à prélever n'est pas contenu dans le flacon 41 mais il est prélevé à un point de prélèvement distant, au niveau duquel est positionnée l'extrémité libre du conduit 52 du dispositif 50 de la figure 4. Le procédé de mélange intégrant ce procédé de prélèvement à distance est décrit uniquement par ses différences avec le procédé de mélange déjà décrit ci-dessus.

En partant dudit état initial, dans lequel le piston 5 est dans la première position, la vanne 2 est placée dans une position de prélèvement établissant une communication fluidique entre le conduit d'entrée 31 et la chambre 10, via la voie V2, le point de distribution V0 et le premier conduit de raccordement 15. La vanne 51 est quant à elle placée dans la position de prélèvement de liquide établissant une communication fluidique entre le conduit d'entrée 31 et le conduit de prélèvement 52, via la voie de prélèvement V22 et le point de distribution V21. Les vannes 2 et 51 ainsi positionnées établissent par conséquent une communication fluidique entre le conduit de prélèvement 52 et la chambre 10 de la pompe 1.

Le piston 5 est déplacé dans le premier sens S1.

Lors d'une première phase de ce déplacement, l'air présent dans le premier conduit de raccordement 15, dans le conduit d'entrée 31 et dans le conduit de prélèvement 52 pénètre progressivement dans la chambre 10 et, simultanément, une partie du premier liquide situé audit point de prélèvement est prélevée en se déplaçant dans le conduit de prélèvement 52 puis dans le conduit d'entrée 31 en direction de la chambre 10.

Le déplacement du piston 5 est interrompu au moins le temps de placer la vanne 51 dans la position de prélèvement d'air établissant une communication fluidique entre la voie ouverte V23 et le conduit d'entrée 31. La vanne 2 est maintenue dans la position de prélèvement décrite ci-dessus.

Lors d'une deuxième phase du déplacement du piston 5 dans le premier sens S1, de l'air pénètre dans le conduit d'entrée 31 via la voie ouverte V23 tandis que le premier liquide continu d'être déplacé dans le conduit d'entrée 31 puis dans le premier conduit de raccordement 15 en direction de la chambre 10.

Le principe de ce procédé de prélèvement consiste donc à prélever une quantité de liquide réduite et à l'acheminer dans un conduit entre deux volumes d'air.

De manière générale, l'arrivée du premier liquide prélevé au niveau de la vanne 2, dans cet exemple au niveau de la voie V2, peut être déterminée par calcul et/ou détectée par un capteur (non représenté).

En fonction de la longueur du conduit d'entrée 31, des purges d'air intermédiaires peuvent s'avérer nécessaire pour acheminer le premier liquide ainsi prélevé jusque dans la chambre 10 de la pompe 1.

Une purge d'air intermédiaire peut être réalisée en plaçant la vanne 2 dans la position de vidange ou éventuellement dans une position de purge mettant en communication fluidique le premier conduit de raccordement 15 et une voie dédiée telle la voie V12. Après un tel positionnement de la vanne 2, le piston 5 est déplacé dans le deuxième sens S2 pour évacuer une partie de l'air contenu dans le premier conduit de raccordement 15 et la chambre 10. La vanne 2 est ensuite replacée dans la position de prélèvement décrite ci-dessus, puis le piston 5 est déplacé dans le premier sens S1 pour poursuivre l'acheminement du premier liquide vers la chambre 10.

L'introduction dans la chambre 10 du premier liquide puis du deuxième liquide, ainsi que leur mélange, peuvent ensuite être réalisés tel que décrit ci-dessus.

Le procédé de prélèvement à distance peut aussi être mis en œuvre dans le cadre d'autres applications, par exemple pour prélever un échantillon liquide et analyser cet échantillon sans le mélanger à d'autres liquides.

### Exemple de mise en œuvre pour une mesure de pH

Il est décrit ci-dessous un exemple particulier de mise en œuvre du dispositif de mélange de la figure 1, pour mesurer le pH d'une solution aqueuse acide.

Les flacons 41, 42 et 43 contiennent respectivement une solution d'oxalate de sodium, une solution d'un colorant sensible au pH et un liquide de rinçage tel qu'une solution aqueuse d'un acide faible.

Les conditions initiales sont les suivantes. Les conduits 33, 34 et 35 sont remplis des solutions correspondantes et les autres éléments du dispositif sont rincés et exposés à l'air ambiant.

Une première séquence consiste à préparer un échantillon de la solution aqueuse acide en vue de son analyse.

Pour ce faire, un opérateur plonge l'extrémité libre du conduit 31 dans un cruchon (non représenté) contenant la solution aqueuse acide. La vanne 2 est positionnée pour mettre en communication fluidique le point de distribution V0 et la voie V2, et le piston 5 est déplacé dans le premier sens S1 afin de soutirer un volume d'échantillon équivalent au volume du conduit 31, ainsi que 20 µL supplémentaires pour le rinçage. La vanne 2 est positionnée pour mettre en communication fluidique le point de distribution V0 et la voie V1, et le piston 5 poursuit sa course jusqu'à la deuxième position (position haute maximale) afin d'aspirer un maximum d'air. La vanne 2 est ensuite positionnée pour mettre en communication fluidique le point de distribution V0 et la voie V7, et le piston 5 est déplacé dans le deuxième sens S2 jusqu'à la première position (position basse maximale) afin de pousser le surplus de 20 µL de l'échantillon aux effluents.

Une deuxième séquence consiste à rincer le dispositif avec la solution d'oxalate de sodium utilisée comme milieu réactif principal.

A cet effet, la vanne 2 est positionnée pour mettre en communication fluidique le point de distribution V0 et la voie V4, et le piston 5 est déplacé dans le premier sens S1 afin de soutirer un volume de 200 µL de la solution d'oxalate de sodium. La vanne 2 est positionnée pour mettre en communication fluidique le point de distribution V0 et la voie V1, et le piston 5 poursuit sa course jusqu'à la position haute maximale afin d'aspirer un maximum d'air. Le piston 5 est ensuite déplacé en position basse maximale afin d'envoyer les 200 µL de solution d'oxalate de sodium dans la cavité 18 du récipient 3, puis de nouveau en position haute maximale afin de renvoyer les 200 µL de solution d'oxalate de sodium dans la chambre 10 de la pompe 1. La vanne 2 est ensuite positionnée pour mettre en communication fluidique le point de distribution V0 et la voie V7, et le piston 5 est déplacé en position basse maximale afin de pousser les 200 µL de solution d'oxalate de sodium qui ont permis de faire un pré-rinçage dans le milieu majoritaire de l'analyse à venir.

Une troisième séquence consiste à prélever des volumes définis de solution d'oxalate de sodium, de solution de colorant et d'échantillon. Dans le cadre de cette troisième séquence, un ou plusieurs pré-rinçages supplémentaires peuvent être réalisés de la manière décrite ci-dessus, avec différents volumes de la solution d'oxalate de sodium, par exemple un premier pré-rinçage supplémentaire avec un volume de 1000 µL de la solution d'oxalate de sodium et un deuxième pré-rinçage supplémentaire avec un volume de 200 µL de la solution d'oxalate de sodium.

Pour réaliser les prélèvements, la vanne 2 est positionnée pour mettre en communication fluidique le point de distribution V0 et la voie V4, et le piston 5 est déplacé dans le premier sens S1 afin de soutirer un volume de 790 µL de la solution d'oxalate de sodium. La vanne 2 est ensuite positionnée pour mettre en communication fluidique le point de distribution V0 et la voie V5, et le piston 5 poursuit sa course dans le premier sens S1 afin de soutirer un volume de 100 µL de la solution de colorant. La vanne 2 est ensuite positionnée pour mettre en communication fluidique le point de distribution V0 et la voie V2, et le piston 5 poursuit sa course dans le premier sens S1 afin de soutirer un volume de 10 µL d'échantillon.

Une quatrième séquence consiste à mélanger les liquides ainsi prélevés.

Pour ce faire, la vanne 2 est positionnée pour mettre en communication fluidique le point de distribution V0 et la voie V1, et le piston 5 poursuit sa course dans le premier sens S1 jusqu'à atteindre sa position haute maximale afin d'aspirer un maximum d'air. Le piston 5 est ensuite déplacé en position basse maximale afin d'envoyer les 900 µL du mélange dans la cavité 18, puis en position haute maximale afin de renvoyer les 900 µL du mélange dans la chambre 10, puis de nouveau en position basse maximale afin de renvoyer les 900 µL du mélange dans la cavité 18.

Une cinquième séquence consiste à analyser le mélange présent dans la cavité 18 du récipient 3. Le récipient 3 est dans cet exemple une cuve de mesure spectrophotométrique. Il est réalisé une acquisition de spectre brut sur la solution présente dans la cavité 18 de la cuve 3.

De manière connue en soi, un ensemble de calculs prenant en compte cette acquisition, ainsi que les étalons précédemment réalisés et les volumes mis en jeu permettent de déduire le pH de l'échantillon.

Une sixième séquence consiste à évacuer le mélange vers le flacon 44 destiné à recevoir les effluents. Pour ce faire, le piston 5 est déplacé en position haute maximale afin d'introduire les 900 µL du mélange dans la chambre 10. La vanne 2 est ensuite positionnée pour mettre en communication fluidique le point de distribution V0 et la voie V7, et le piston 5 est déplacé en position basse maximale afin de pousser les 900 µL de solution vers les effluents.

Une septième séquence consiste à rincer le dispositif avec un acide faible. Pour ce faire, la vanne 2 est positionnée pour mettre en communication fluidique le point de distribution V0 et la voie V6, et le piston 5 est déplacé dans le premier sens S1 afin de soutirer un volume de 200 µL de la solution d'acide faible. La vanne 2 est ensuite positionnée pour mettre en communication fluidique le point de distribution V0 et la voie V1, et le piston 5 est déplacé en position haute maximale afin d'aspirer un maximum d'air, puis en position basse maximale afin d'envoyer les 200 µL d'acide faible dans la cavité 18, puis de nouveau en position haute maximale afin de renvoyer les 200 µL d'acide faible dans la chambre 10. La vanne 2 est ensuite positionnée pour mettre en communication fluidique le point de distribution V0 et la voie V7, et le piston 5 est déplacé en position basse maximale afin d'évacuer les 200 µL d'acide faible qui ont permis de faire un rinçage.

Un ou plusieurs rinçages supplémentaires peuvent être réalisés de la manière décrite ci-dessus, avec différents volumes de la solution d'acide faible, par exemple un premier rinçage supplémentaire avec un volume de 1000 µL de la solution d'acide faible et un deuxième rinçage supplémentaire avec un volume de 200 µL de la solution d'acide faible.

Une huitième séquence consiste à renvoyer le surplus de l'échantillon dans le cruchon. Pour ce faire, la vanne 2 est positionnée pour mettre en communication fluidique le point de distribution V0 et la voie V1, et le piston 5 est déplacé vers la position haute maximale afin d'aspirer un volume d'air correspondant au volume du conduit 31 plus une marge de 20 µL. La vanne 2 est ensuite positionnée pour mettre en communication fluidique le point de distribution V0 et la voie V2, et le piston 5 est déplacé en position basse maximale afin de pousser l'air dans le conduit 31 et renvoyer ainsi l'échantillon non utilisé dans le cruchon.

## Revendications

1. Dispositif de mélange de liquides, ce dispositif comprenant une pompe (1) à piston (5), une vanne (2) multivoie, un récipient (3), un premier conduit (15) de raccordement de la vanne (2) à une chambre (10) de la pompe (1), un deuxième conduit (27) de raccordement d'une cavité (18) du récipient (3) à une voie de transfert (V1) de la vanne (2), plusieurs conduits d'entrée (31-35) reliés chacun à une voie d'entrée (V2-V6) respective de la vanne (2), la vanne (2) pouvant occuper sélectivement :
- des positions de prélèvement établissant chacune une communication fluidique entre l'un respectif desdits conduits d'entrée (31-35) et la chambre (10) de manière à pouvoir déplacer l'un respectif desdits liquides de ce conduit d'entrée vers la chambre (10) sous l'action d'un déplacement dudit piston (5) dans un premier sens (S1),
- une position de transfert établissant une communication fluidique entre la chambre (10) et la cavité (18) de manière à pouvoir déplacer lesdits liquides, via le premier et le deuxième conduit de raccordement (15, 27), de la chambre (10) à la cavité (18) sous l'action d'un déplacement du piston (5) dans un deuxième sens (S2) et de la cavité (18) à la chambre (10) sous l'action d'un déplacement du piston (5) dans ledit premier sens (S1),
ce dispositif étant **caractérisé en ce que**, au moins lorsque la vanne (2) occupe la position de transfert, la cavité (18) définit un point bas (26) et ledit deuxième conduit de raccordement (27) est relié au récipient (3) de manière à pouvoir introduire dans la cavité (18) ou en extraire lesdits liquides par ce point bas (26).

2. Dispositif de mélange selon la revendication 1, dans lequel la cavité (18) est ouverte à une extrémité du récipient (3) opposée au point bas (26).

3. Dispositif de mélange selon la revendication 2, dans lequel la cavité (18) présente une section se rétrécissant en allant vers le point bas (26).

4. Dispositif de mélange selon l'une quelconque des revendications 1 à 3, dans lequel, au moins lorsque le dispositif est dans ladite configuration d'utilisation, la chambre (10) définit un point bas (16) et ledit premier conduit de raccordement (15) est relié à la pompe (1) de manière à pouvoir introduire dans la chambre (10) ou en extraire lesdits liquides par ce point bas (16).

5. Dispositif de mélange selon l'une quelconque des revendications 1 à 4, dans lequel le récipient (3) est une cuve de mesure spectrophotométrique.

6. Dispositif de mélange selon l'une quelconque des revendications 1 à 5, dans lequel ladite vanne (2) est une vanne principale, ce dispositif de mélange comprenant un dispositif de prélèvement (50) comprenant une vanne de prélèvement (51) et un conduit de prélèvement (52) relié à une voie de prélèvement (V22) de la vanne de prélèvement (51), la vanne de prélèvement (51) pouvant occuper sélectivement :
- une position de prélèvement de liquide établissant une communication fluidique entre le conduit de prélèvement (52) et un premier (31) desdits conduits d'entrée (31-35) de manière à pouvoir déplacer le liquide du conduit de prélèvement (52) vers la chambre (10) sous l'action d'un déplacement du piston (5) dans le premier sens (S1) lorsque la vanne principale (2) est dans une première position de prélèvement établissant une communication fluidique entre ledit premier conduit d'entrée (31) et la chambre (10),
- une position de prélèvement d'air établissant une communication fluidique entre une voie ouverte (V23) de la vanne de prélèvement (51) et ledit premier conduit d'entrée (31), ladite voie ouverte (V23) étant exposée à l'air environnant, de manière à pouvoir déplacer de l'air environnant vers la chambre (10) sous l'action d'un déplacement dudit piston (5) dans un premier sens (S1) lorsque la vanne principale (2) est dans ladite première position de prélèvement.

7. Dispositif d'analyse physico-chimique d'un liquide, ce dispositif d'analyse comprenant un dispositif de mélange selon l'une quelconque des revendications 1 à 6.

8. Dispositif d'analyse selon la revendication 7, ce dispositif comprenant un détecteur spectrophotométrique.

9. Procédé de mélange de liquides à l'aide d'un dispositif de mélange selon l'une quelconque des revendications 1 à 6, ce procédé comprenant :
- une étape de prélèvement dans laquelle lesdits liquides sont respectivement déplacés depuis lesdits conduits d'entrée (31-35) vers la chambre (10) de la pompe (1), cette étape comprenant un positionnement de la vanne (2) dans lesdites positions de prélèvement respectives,
- une étape de remplissage du récipient (3) comprenant un déplacement d'au moins une partie des liquides de la chambre (10) à la cavité (18), cette étape comprenant un positionnement de la vanne (2) dans ladite position de transfert,
- une étape de mélange comprenant un déplacement d'au moins une partie des liquides de la cavité (18) à la chambre (10) puis de la chambre (10) à la cavité (18).

10. Procédé d'analyse physico-chimique d'un liquide à l'aide d'un dispositif d'analyse selon la revendication 7 ou 8, ce procédé d'analyse incluant un procédé de mélange selon la revendication 9.

## Patentansprüche

1. Flüssigkeitsmischvorrichtung, wobei diese Vorrichtung eine Pumpe (1) mit einem Kolben (5), ein Mehrwegeventil (2), einen Behälter (3), eine erste Leitung (15) zum Anschluss des Ventils (2) an eine Kammer (10) der Pumpe (1), eine zweite Leitung (27) zum Anschluss eines Hohlraums (18) des Behälters (3) an einen Übertragungsweg (V1) des Ventils (2), mehrere Eingangsleitungen (31-35), die jeweils mit einem jeweiligen Eingangsweg (V2-V6) des Ventils (2) verbunden sind, umfasst, wobei das Ventil (2) selektiv Folgendes belegen kann:
- Entnahmestellungen, die jeweils eine fluidische Kommunikation zwischen einer der Eingangsleitungen (31-35) und der Kammer (10) herstellen, so dass eine der Flüssigkeiten aus dieser Eingangsleitung in die Kammer (10) durch eine Bewegung des Kolbens (5) in eine erste Richtung (S1) bewegt werden kann,
- eine Übertragungsstellung, die eine fluidische Kommunikation zwischen der Kammer (10) und dem Hohlraum (18) herstellt, so dass die Flüssigkeiten über die erste und die zweite Anschlussleitung (15, 27) von der Kammer (10) zu dem Hohlraum (18) durch eine Bewegung des Kolbens (5) in eine zweite Richtung (S2) und von dem Hohlraum (18) zu der Kammer (10) durch eine Bewegung des Kolbens (5) in die erste Richtung (S1) bewegt werden können,
wobei diese Vorrichtung **dadurch gekennzeichnet ist, dass** mindestens, wenn das Ventil (2) die Übertragungsstellung einnimmt, der Hohlraum (18) einen Tiefpunkt (26) definiert und die zweite Anschlussleitung (27) mit dem Behälter (3) verbunden ist, so dass die Flüssigkeiten durch diesen Tiefpunkt (26) in den Hohlraum (18) eingeführt oder daraus entnommen werden können.

2. Mischvorrichtung nach Anspruch 1, wobei der Hohlraum (18) an einem dem Tiefpunkt (26) gegenüberliegenden Ende des Behälters (3) geöffnet ist.

3. Mischvorrichtung nach Anspruch 2, wobei der Hohlraum (18) einen sich zu dem Tiefpunkt (26) hin verengenden Querschnitt aufweist.

4. Mischvorrichtung nach einem der Ansprüche 1 bis 3, wobei mindestens, wenn sich die Vorrichtung in der Verwendungskonfiguration befindet, die Kammer (10) einen Tiefpunkt (16) definiert und die erste Anschlussleitung (15) mit der Pumpe (1) verbunden ist, so dass die Flüssigkeiten über diesen Tiefpunkt (16) in die Kammer (10) eingeführt oder aus ihr entnommen werden können.

5. Mischvorrichtung nach einem der Ansprüche 1 bis 4, wobei der Behälter (3) ein spektrophotometrisches Messgefäß ist.

6. Mischvorrichtung nach einem der Ansprüche 1 bis 5, wobei das Ventil (2) ein Hauptventil ist, wobei diese Mischvorrichtung eine Entnahmevorrichtung (50) umfasst, die ein Entnahmeventil (51) und eine Entnahmeleitung (52) umfasst, die mit einem Entnahmeweg (V22) des Entnahmeventils (51) verbunden ist, wobei das Entnahmeventil (51) selektiv Folgendes belegen kann:
- eine Flüssigkeitsentnahmestellung, die eine fluidische Kommunikation zwischen der Entnahmeleitung (52) und einer ersten (31) der Eingangsleitungen (31-35) herstellt, so dass die Flüssigkeit aus der Entnahmeleitung (52) in die Kammer (10) durch eine Bewegung des Kolbens (5) in die erste Richtung (S1) bewegt werden kann, wenn sich das Hauptventil (2) in einer ersten Entnahmestellung befindet, die eine fluidische Kommunikation zwischen der ersten Eingangsleitung (31) und der Kammer (10) herstellt,
- eine Luftentnahmestellung, die eine fluidische Kommunikation zwischen einem offenen Weg (V23) des Entnahmeventils (51) und der ersten Eingangsleitung (31) herstellt, wobei der offene Weg (V23) der Umgebungsluft ausgesetzt ist, so dass Umgebungsluft durch eine Bewegung des Kolbens (5) in eine erste Richtung (S1) in Richtung der Kammer (10) bewegt werden kann, wenn sich das Hauptventil (2) in der ersten Entnahmestellung befindet.

7. Vorrichtung zur physikalisch-chemischen Analyse einer Flüssigkeit, wobei diese Analysevorrichtung eine Mischvorrichtung nach einem der Ansprüche 1 bis 6 umfasst.

8. Analysevorrichtung nach Anspruch 7, wobei diese Vorrichtung einen spektrophotometrischen Detektor umfasst.

9. Verfahren zum Mischen von Flüssigkeiten unter Verwendung einer Mischvorrichtung nach einem der Ansprüche 1 bis 6, wobei dieses Verfahren Folgendes umfasst:
- einen Schritt des Entnehmens, bei dem die Flüssigkeiten jeweils von den Eingangsleitungen (31-35) in die Kammer (10) der Pumpe (1) bewegt werden, wobei dieser Schritt das Positionieren des Ventils (2) in den jeweiligen Entnahmestellungen umfasst,
- einen Schritt des Befüllens des Behälters (3), der das Verschieben von mindestens einem Teil der Flüssigkeiten aus der Kammer (10) in den Hohlraum (18) umfasst, wobei dieser Schritt das Positionieren des Ventils (2) in der Übertragungsstellung umfasst,
- einen Schritt des Mischens, der eine Verdrängung von mindestens einem Teil der Flüssigkeiten aus dem Hohlraum (18) in die Kammer (10) und dann aus der Kammer (10) in den Hohlraum (18) umfasst.

10. Verfahren zur physikalisch-chemischen Analyse einer Flüssigkeit unter Verwendung einer Analysevorrichtung nach Anspruch 7 oder 8, wobei dieses Analyseverfahren ein Mischverfahren nach Anspruch 9 einschließt.

## Claims

1. Mixing device for liquids, this device comprising a piston (5) pump (1), a multi-way valve (2), a recipient (3), a first duct (15) for connecting the valve (2) to a chamber (10) of the pump (1), a second duct (27) for connecting a cavity (18) of the recipient (3) to a transfer way (V1) of the valve (2), several inlet ducts (31-35) each connected to a respective inlet way (V2-V6) of the valve (2), the valve (2) being able to selectively occupy:
- sampling positions each establishing a fluidic communication between a respective one of said inlet ducts (31-35) and the chamber (10) so as to be able to move a respective one of said liquids from this inlet duct towards the chamber (10) by the action of a movement of said piston (5) in a first direction (S1),
- a transfer position establishing a fluidic communication between the chamber (10) and the cavity (18) so as to be able to move said liquids, via the first and the second connection duct (15, 27), from the chamber (10) to the cavity (18) by the action of a movement of the piston (5) in a second direction (S2) and from the cavity (18) to the chamber (10) by the action of a movement of the piston (5) in said first direction (S1),
this device being **characterised in that**, at least in one use configuration of this device, the cavity (18) defines a low point (26) and said second connection duct (27) is connected to the recipient (3) so as to be able to introduce into the cavity (18) or extract therefrom said liquids through this low point (26).

2. Mixing device according to claim 1, wherein the cavity (18) is open at one end of the recipient (3) opposite to the low point (26).

3. Mixing device according to claim 2, wherein the cavity (18) has a section narrowing towards the low point (26).

4. Mixing device according to any one of claims 1 to 3, wherein, at least when the device is in said use configuration, the chamber (10) defines a low point (16) and said first connection duct (15) is connected to the pump (1) so as to be able to introduce into the chamber (10) or extract therefrom said liquids through this low point (16).

5. Mixing device according to any one of claims 1 to 4, wherein the recipient (3) is a spectrophotometric measuring cell.

6. Mixing device according to any one of claims 1 to 5, wherein said valve (2) is a main valve, this mixing device comprising a sampling device (50) comprising a sampling valve (51) and a sampling duct (52) connected to a sampling way (V22) of the sampling valve (51), the sampling valve (51) being able to selectively occupy:
- a liquid sampling position establishing a fluidic communication between the sampling duct (52) and a first (31) one of said inlet ducts (31-35) so as to be able to move the liquid from the sampling duct (52) towards the chamber (10) by the action of a movement of the piston (5) in the first direction (S1) when the main valve (2) is in a first sampling position establishing a fluidic communication between said first inlet duct (31) and the chamber (10),
- an air sampling position establishing a fluidic communication between an open way (V23) of the sampling valve (51) and said first inlet duct (31), said open way (V23) being exposed to the surrounding air, so as to be able to move surrounding air towards the chamber (10) by the action of a movement of said piston (5) in a first direction (S1) when the main valve (2) is in said first sampling position.

7. Analysis device for the physicochemical analysis of a liquid, this analysis device comprising a mixing device according to any one of claims 1 to 6.

8. Analysis device according to claim 7, this device comprising a spectrophotometric detector.

9. Method for mixing liquids using a mixing device according to any one of claims 1 to 6, this method comprising:
- a sampling step in which said liquids are respectively moved from said inlet ducts (31-35) towards the chamber (10) of the pump (1), this step comprising positioning the valve (2) in said respective sampling positions,
- a step of filling the recipient (3) comprising moving at least part of the liquids from the chamber (10) to the cavity (18), this step comprising positioning the valve (2) in said transfer position,
- a mixing step comprising moving at least part of the liquids from the cavity (18) to the chamber (10) then from the chamber (10) to the cavity (18).

10. Analysis method for physicochemical analysis of a liquid using an analysis device according to claim 7 or 8, this analysis method including a mixing method according to claim 9.
